# EUROPEAN PATENT APPLICATION

(11) **EP 0 618 516 A1**
(43) Date of publication of application: **05.10.1994**
(21) Application number: 93830520.8
(22) Date of filing: 23.12.1993
(51) Int. Cl.: G05B 19/04

(54) **Device for remote adjustment of periferical equipments**

(30) Priority: 31.03.1993 IT MI930637
(71) Applicant: INECO S.r.l., I-22048 Oggiono (Como) (IT)
(72) Inventor: Colombo, Roberto, I-22066 Mariano Comense (Como) (IT)
(74) Representative: Righetti, Giuseppe

(57) **Abstract**

The invention relates to the technical field of apparatus for controlling use equipments and particularly concerns a device for the remote adjustment of peripheral equipments which comprises a base unit (8) installed close to the peripheral equipment and provided with a microprocessor (4) and a modulation-demodulation circuitry (7), which base unit, through a double-wire line (9 and 10), supplies and exchanges data to a remote unit (21) in turn provided with a microprocessor (20) and a modulation-demodulation circuitry (11) to which adjustment parameters can be remotely inputted by acting on the operating mode of the peripheral equipment, all that being adjusted by a sequence of signals that, conveniently distributed, enable the peripheral-equipment adjusting actuators to be turned on and off.

## Description

The present invention relates to a device for the remote adjustment of peripheral equipments.

It is known that in the field of electronically adjusted apparatus there is the problem of carrying out a remote adjustment of the peripheral equipments, such as for example boilers, air-conditioners, coolers and the like, bath in a domestic and industrial environment, without being obliged to regularly come close to the site where these equipments are installed, which would be time-consuming and would involve use of man-power to this end.

In addition, in this type of adjustments a wide variety of application fields is to be provided, in that a diversification between the so-called domestic users and industrial users is impossible, due both to economical reasons and installation reasons.

Moreover, it may happen that the particular adjustment adopted is suitable to a given type of boiler for example, and cannot be used for others.

At the present state of the art no specific embodiments exist that are capable of meeting the above requirements in a consistent manner from the point of view of plant engineering, offering at the same time reasonable prices and very simple technical solutions.

There are for example boilers provided with adjustment microprocessors which are then connected, through connecting means, to remote control boards enabling the remote inputting of the adjusting parameters. This type of adjustment is very onerous in terms of circuits, installations and prices and in addition it is not always adapted to the several different types of peripheral equipments.

The object of the present invention is to eliminate the above drawbacks typical of the apparatus presently in use, by providing a device for the remote adjustment of peripheral equipments, in which device, located close to a peripheral equipment, ⁿhe whole circuitry relating to the control functions of the peripheral itself has been incorporated, said peripheral being connected via a double-wire line to remote units so that the control operations carried out by the device are made quick, reliable and practically feasible.

The above and still further objects that will become more apparent in the course of the following description are achieved by a device for the remote adjustment of peripheral equipments as claimed in the first main claim and in the following dependent claims.

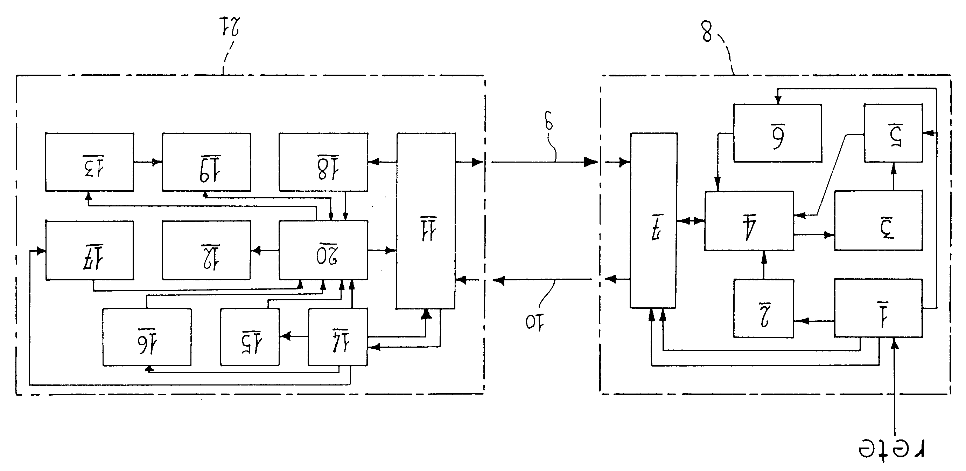

Further features and advantages will be best understood from the detailed description of a preferred embodiment of a device for the remote adjustment of peripheral equipments given hereinafter by way of non-limiting example with reference to the accompanying drawing reproducing a block diagram in which the elements forming the device circuits related both to the so-called base section and remote section are shown.

Referring to the drawing, a device according to the present invention and referring to the so-called base section which is physically located in a peripheral equipment such as a boiler for example, has been generally identified by reference numeral 8.

Present in said base section or unit 8 is a feed circuit 1 supplying either 24 V or 5 V power and connected to a module 2 for inputting parameters. Also provided is a circuit 3 signalling the operating condition of the peripheral equipment, as well as a flame-detecting circuit 5 and a circuit 6 relating to temperature sensors (probes) which is provided with an A/D converter, all these circuits being in turn connected to a circuit 4 representing the microprocessor proper, which in turn governs a modulation-demodulation circuitry 7 acting as an interface towards a double-wire connection line 9 and 10. Also present in the base section 8 is a proportional gas valve, not shown in the drawing, serving as an actua¦on means for carrying out the programmed inputs, temperature inputs for example suitably converted to digital signals.

Such carrying-out takes place by utilizing a proportional-integral-derivative algorithm comparing the inputted temperature with the present one and, through said proportional valve, enabling the peripheral equipment power to be varied so that both temperatures become of same value.

Obviously the above operations relating to temperature are also valid for other similar parameters.

On the other hand, in the remote section there is a remote circuitry 21 in which the following components can be identified.

There is a modulation-demodulation circuitry 11 which is power supplied from a feed circuit 14 which in turn enables a communication-signalling circuit 13 to be activated as well as an operating-condition-signalling circuit 12. In addition, a circuitry for selection of the operating condition has been denoted by block 15 and an amplifier circuit for the temperature sensor has been denoted by block 16.

The remote circuitry 21 is also provided with a microprocessor 20, a circuit for the conditions to be inputted 17, a timing quartz circuit 19 and a filtering circuit 18.

Operation of the device described above mainly as regards structure is as follows.

First it is to be pointed out that the remote unit 21 and base unit 8 of the device are connected to each other by a double-wire line 9 and 10, along which, in addition to the power supply for the remote section, a plurality of activation and information signals also travel, which signals, to be specified in the following, are suitably modulated-demodulated by the respective circuit units 7 and 11, through the control of respective microprocessors 4 and 20, which are of the single-chip type and therefore also include an I/O (input/output) port and a RAM (random access memory), as well as all elements usually present therein. Usually the connecting line 9 and 10 is clear only when it is not activated by one of the two units, whereas synchronisms, that is pauses and starts, are generated by the base 8 in a synchronous mode.

Base 8 begins receiving and then generates a first start bit after a synchronism pause of about 32 bit time corresponding to a minimum of 200 ms.

In this manner the base 8 controls that the line is clear before each start bit and also controls that each received bit is exact by checking its logical complement. In case of error the received data are not considered and a new pause is generated until the next start of the information pack.

The validation of the received data and therefore the occurrence of the connection between the base 8 and remote unit 21 takes place when sending of the information pack has been completed and the following synchronism pause is beginning. Both the base unit and remote unit are allowed to manage any information as a data item, even after a sequence of several wrong packs. The remote unit 21, on the contrary, waits for the first start bit, that is the first signal leading edge after a valid pause, which takes place when the line has not been active for about 60 ms corresponding to a 10 bit time.

The remote unit 21 then expects to receive other start bits and from the second to the last one in the appropriate start window, that is in the time during which there is the leading edge, the false starts due to the zero bit are ignored. All other leading edges or the lack of leading edges in the start window are considered as errors. The remote unit 21 controls that each received bit is exact by means of its logical complement. In case of errors the received data are discarded and a break is generated which has a duration of 60 ms in order to signal failure of connection to the base 8.

By filter 18 a 3 ms delay is generated that must be compensated for by the firmware located on the remote unit 21, in the microprocessor 20, that anticipates by an equal time its answers to the signals sent from the base unit 8.

The whole firmware present serves to adjust both the base 8 and remote unit 21.

The base is allowed to recognize the remote unit and vice-versa through an appropriate access key.

The key may have a fixed value which is returned in case of a request, or an algorithm processing the data item sent together with the request and then returning the result as an answer.

The request corresponds to a bit value in the data sent and can differentiate data between normal data and recognization data. The answer practically takes place on returning of the fixed key or the result of the algorithm in place of the output data, by signalling the normal ones of these data by a bit so as to differentiate them from the recognization data. The recognization request may be generated at any moment.

On the base unit 8, taking into account the double-wire connection of lines 9 and 10, off-hooking of a line can be caused or not by controlling whether there are oscillations (which means a hooked off line) or not (which means a clear line).

In the case in question, through the modulation-demodulation units 7 and 11, capacitors are provided that affect the line capacity and ensure a resonance even when the lines are very short. The work frequency with the given values ranges between 50 and 70 KHz and depends on the line features. The minimum input voltage to the feeder stabilizer 14 is about 8 volts.

In summary, according to the connecting criterion between the base unit 8 and remote unit 21, when there is a precise start sequence over a previously constituted period which corresponds to about 200 ms, there is a sequence constituting the information pack proper, that is the one containing the adjusting parameters.

The 23 bits received from the remote unit 21 and 24 bits received from the base unit 8 constitute the pack information contents. From the installation point of view it appears that it is possible to utilize the LEDs (Light-Emitting Diodes) present in the circuitry 17 of the inputted conditions as error signalling LEDs for the o-called connection errors, so that the operating condition of the whole device can be displayed according to a luminous code.

Obviously, from the circuit point of view the essential thing is represented by the modem circuitries 7 and 11, and the double-wire connection 9 and 10.

The invention attains the intended purposes.

In fact it is possible to enable a base unit to be connected to a remote unit installed close to a peripheral equipment through the exploitation of a very simple double-wire connection and have signal packs (which are sent from leading edges and pauses at very precise timings) transmitted by merely sending and checking the passed packs.

Further modifications and variations are possible without departing from the scope of the appended claims.

## Claims

1. A device for adjusting the modules of peripheral equipments characterized in that it comprises a base unit (8) provided with a microprocessor (4) installed at a user unit or peripheral equipment and connected through a double-wire connecting means (9 and 10) to a remote unit (21) provided with a microprocessor (20), both units being interfaced by modem circuits (7 and 11) and being provided with management firmware for the signals to be transmitted and the remote unit (21) being power supplied from the base unit (8) by the double-wire connecting means (9 and 10).

2. A device for adjusting the modules of peripheral equipments according to claim 1, characterized in that the microprocessors (4 and 20) of said base unit (8) and remote unit (21) respectively talk to each other by a double-wire connection (9 and 10).

3. A device for adjusting the modules of peripheral equipments according to claim 1, characterized in that a proportional-integral-derivative algorithm is provided that compares the inputted temperature with the present temperature and through the proportional gas valve varies the power to the user so that both temperatures be identical.

4. A device for adjusting the modules of peripheral equipments according to claim 1, characterized in that the analog inputs of the temperature probes (6) are sequentielly converted to digital signals and stored into the RAMs of each microprocessor (4).

5. A device for adjusting the modules of peripheral equipments according to claim 1, characterized in that signals travelling from the base unit (8) to the remote unit (21) are provided with starts and leading edges, subsequently to which a 56 bit application pack is sent that contains the information proper.

6. A device for adjusting the modules of peripheral equipments according to claim 1, characterized in that said information bits can foresee errors that are regularly controlled at the end of each forwarding.

7. A device for adjusting the modules of peripheral equipments according to claim 1, characterized in that the signalling LEDs (12) are also adapted to signal condition errors according to luminous codes.
